# EUROPÄISCHE PATENTANMELDUNG

(11) **EP 4 575 289 A1**
(43) Veröffentlichungstag der Anmeldung: **25.06.2025**
(21) Anmeldenummer: 24222018.4
(22) Anmeldetag: 20.12.2024
(51) Int. Cl.: F16L 11/11, F16L 11/12, F16L 59/14, F16L 59/153

(54) **THERMISCH GEDÄMMTE ROHRANORDNUNG**

(30) Priorität: 21.12.2023 DE 102023136201
(71) Anmelder: REHAU Industries SE & Co. KG, 95111 Rehau (DE)
(72) Erfinder: Gottschalk, Daniel, 90765 Fürth (DE); Kirsch, Stefan, 91560 Heilsbronn (DE); Moreth, Heiko, 95185 Gattendorf (DE)

(57) **Zusammenfassung**

Die vorliegende Erfindung betrifft eine thermisch gedämmte Rohranordnung (100) zur Aufnahme, Speicherung oder Leitung eines Fluids, die einen Wellrohraußenmantel (10), der eine gewellte Außenschicht (12), die Wellrohrberge (121, 121') und Wellrohrtäler (122, 122') aufweist, und eine Folienschicht (14) umfasst, wobei die Folienschicht im Bereich der Wellrohrtäler (122, 122') umlaufend mit der Außenschicht (12) verbunden ist; mindestens ein in den Wellrohraußenmantel (10) aufgenommenes Medienrohr (50); und mindestens eine Dämmschicht (60), die den Raum zwischen dem mindestens einen Medienrohr (50) und dem Wellrohraußenmantel (10) zumindest teilweise ausfüllt; umfasst, wobei sich die thermisch gedämmte Rohranordnung (100) erfindungsgemäß dadurch auszeichnet, dass die Folienschicht (14) zumindest an ihrer der Außenschicht (12) zugewandten Seite mineralische Füllstoffe umfasst.

## Beschreibung

Die vorliegende Erfindung betrifft eine thermisch gedämmte Rohranordnung, die einen Wellrohraußenmantel, der eine gewellte Außenschicht, die Wellrohrberge und Wellrohrtäler aufweist, und eine Folienschicht umfasst, wobei die Folienschicht im Bereich der Wellrohrtäler umlaufend mit der Außenschicht verbunden ist; mindestens ein in den Wellrohraußenmantel aufgenommenes Medienrohr; und mindestens eine Dämmschicht, die den Raum zwischen dem mindestens einen Medienrohr und dem Wellrohraußenmantel zumindest teilweise ausfüllt ist.

Thermisch gedämmte Rohranordnungen mit gewelltem Außenmantel sind im Stand der Technik grundsätzlich bekannt und werden insbesondere in Wärmeverteilsystemen für Nah- und Fernwärmenetze eingesetzt. Beispielsweises sind einwandige flexible Kunststoffwellrohre am Markt erhältlich. Diese können durch Lagerung, Transport oder unvorsichtige Behandlung an der Baustelle leicht beschädigt werden, so dass Wasser von außen in das Wellrohr eindringen kann. Um diesen Nachteil zu begegnen, gibt es am Markt Wellrohre mit zweischichtigem Außenmantel, bei denen in der gewellten Außenschicht ein Kunststoff-Inliner angeordnet ist. Solche zweischichtige Außenmäntel neigen bereits weniger zu Beschädigungen auf der Baustelle. Dringt allerdings dennoch eine Beschädigung auf, so dass Wasser, beispielsweise in Form von Regen- oder Grundwasser in das Innere des Wellrohrs gelangt, ist nicht gewährleistet, dass ein Wärmeverteilsystem, das ein solches Wellrohr umfasst, nicht teilweise oder ganz voll Wasser läuft und auf diese Weise unbrauchbar wird, was nur unter hohem Aufwand behoben werden kann und mit hohen Kosten verbunden ist. Besonders hohe Sanierungskosten treten gerade dann auf, wenn durch das beschädigte Wärmeverteilsystem große Mengen Wasser unkontrolliert in ein Gebäude gelangen. Darüber hinaus kann eingedrungenes Wasser die Dämmschicht durchfeuchten und so die Dämmeigenschaften der betroffenen thermisch gedämmten Rohranordnung negativ beeinträchtigen. Um dies zu vermieden, wird in der EP 3 974 693 A1 vorgeschlagen, eine zweite, dem gewellten Außenmantel zugewandte Dämmschicht vorzusehen, die beispielsweise als Polyethylen-Schaumfolie ausgebildet sein kann, und diese mit dem im Bereich der Wellentäler des gewellten Außenmantel umlaufend mit dem Außenmantel zu verschweißen. Dies gewährleistet die erforderliche Längswasserdichtheit. Allerdings besteht die Gefahr, dass die Polyethylen-Schaumfolie, die bei der kontinuierlichen Herstellung der in der EP 3 974 693 A1 beschriebenen thermisch gedämmten Rohranordnung durch einen Extruderkopf zur Erzeugung des Außenmantels in Ringform geführt wird, bei den im Extruderkopf herrschenden Temperaturen schmilzt, bevor die Wellenform des Außenmantels nachgeschaltet in einem Corrugator erzeugt werden kann.

An dieser Stelle setzt die vorliegende Erfindung ein, der die Aufgabe zugrunde liegt, eine thermisch gedämmte Rohranordnung zur Verfügung zu stellen, die die Nachteile des Stands der Technik zumindest teilweise überwindet. Insbesondere soll das erfindungsgemäße thermisch gedämmte Rohranordnung sicher durch ein kontinuierliches Verfahren herstellbar sein, ohne dass die Folienschicht des Außenmantels bereits schmilzt, bevor dessen Wellenform erzeugt worden ist. Darüber hinaus soll die erfindungsgemäße thermisch gedämmte Rohranordnung eine hohe Sicherheit gegenüber dem Eindringen von Wasser bei Beschädigung der äußeren Schicht bieten.

Diese und andere Aufgaben werden erfindungsgemäß durch eine thermisch gedämmte Rohranordnung mit den Merkmalen des Anspruchs 1 gelöst. Bevorzugte Ausführungsformen der erfindungsgemäßen thermisch gedämmte Rohranordnung sind jeweils in den abhängigen Ansprüchen beschrieben.

Gemäß der vorliegenden Erfindung wurde erkannt, dass das vorzeitige Aufschmelzen der Folienschicht dadurch verhindert werden kann, dass die Folienschicht an ihrer der Außenschicht zugewandten Seite mineralische Füllstoffe umfasst. Diese mineralische Komponente an der Außenseite der Folienschicht verzögert das Aufschmelzen des Materials lange genug (ca. 10 bis 20 s), um die Folienschicht durch den heißen Extruderkopf (im Falle einer Außenschicht aus Polyethylen etwa 240°C) führen zu können, ohne dass diese schmilzt. Beim nachfolgenden, längeren Kontakt mit der Außenschicht im Corrugator (in der Regel länger als 30 s), in dem diese ihre gewellte Form erhält, wird die Folienschicht schließlich aufgeschmolzen, so dass es zur umlaufenden Verschmelzung der Folienschicht mit der Au-ßenschicht im Bereich der Wellrohrtäler kommt. Dadurch wird die Folienschicht an jedem Wellental umläufig mit dem Außenmantel verschweißt, so dass es bei einer Beschädigung des Außenmantels weder zu einem Wassertransport in Längsrichtung der thermisch gedämmten Rohranordnung zwischen dem Außenmantel und der Wärmedämmung noch zu einem Eindringen des Wassers in die Dämmschicht kommt.

Dementsprechend liegt die vorliegende Erfindung in der Bereitstellung einer thermisch gedämmten Rohranordnung zur Aufnahme, Speicherung oder Leitung eines Fluids, die einen Wellrohraußenmantel, der eine gewellte Außenschicht, die Wellrohrberge und Wellrohrtäler aufweist, und eine Folienschicht umfasst, wobei die Folienschicht im Bereich der Wellrohrtäler umlaufend mit der Außenschicht verbunden ist; mindestens ein in den Wellrohraußenmantel aufgenommenes Medienrohr; und mindestens eine Dämmschicht umfasst, die den Raum zwischen dem mindestens einen Medienrohr und dem Wellrohraußenmantel zumindest teilweise ausfüllt ist; wobei sich die thermisch gedämmte Rohranordnung erfindungsgemäß weiter dadurch gekennzeichnet, dass die Folienschicht zumindest an ihrer der Außenschicht zugewandten Seite mineralische Füllstoffe umfasst.

In Bezug auf die erfindungsgemäße thermisch gedämmte Rohranordnung kann es günstig sein, wenn die Folienschicht mehrschichtig aufgebaut ist, wobei die mineralischen Füllstoffe zumindest in der der Außenschicht zugewandten Schicht der Folienschicht enthalten sind. Auf diese Weise kommt es zu einem geringen Einsatz mineralischer Füllstoffe in der Folienschicht bei ausreichender thermischer Stabilität. Weitere Schichten der Folienschicht können dann zusätzliche Funktionen übernehmen, insbesondere zur thermischen Dämmung der erfindungsgemäßen Rohranordnung beitragen. In diesen Zusammenhang kann es besonders günstig sein, wenn die der Außenschicht zugewandte Schicht die mineralischen Füllstoffe in einem Anteil von 3 Gew.-% bis 30 Gew.%, bezogen auf das Gesamtgewicht dieser Schicht als 100 Gew.-%, umfasst. Ein Anteil an mineralischen Füllstoffen in dieser Schicht im Bereich von 5 Gew.-% bis 20 Gew.%, jeweils bezogen auf das Gesamtgewicht dieser Schicht als 100 Gew.-%, ist besonders bevorzugt.

Es kann auch von Vorteil sein, wenn die gesamte Folienschicht die mineralischen Füllstoffe in einem Anteil von 3 Gew.-% bis 30 Gew.%, bezogen auf das Gesamtgewicht der Folienschicht als 100 Gew.-%, umfasst. Ein Anteil an mineralischen Füllstoffen in dieser Schicht im Bereich von 5 Gew.-% bis 20 Gew.%, jeweils bezogen auf das Gesamtgewicht dieser Schicht als 100 Gew.-%, ist besonders bevorzugt.

Es ist erwünscht, dass die Folienschicht eine Schicht aus geschäumtem Polymermaterial, insbesondere aus einem geschlossenzelligen Polymerschaumschaum, umfasst. Eine Schicht aus geschäumtem Polymermaterial trägt zu den guten Dämmeigenschaften der erfindungsgemäßen thermisch gedämmten Rohranordnung bei. In einer vorteilhaften Ausgestaltung ist die der Außenschicht zugewandte Schicht auf die Polymerschaumschicht aufkaschiert. Eine solche aufkaschierte Folie lässt sich gut mit der Außenschicht verschweißen. Vorzugsweise wird dazu eine Polyethylenfolie eingesetzt. Die Dicke der aufkaschierten Folie beträgt vorzugsweise 25 µm bis 120 µm, insbesondere 40 µm bis 70 µm.

Als mineralische Füllstoffe können beispielsweise Magnesium-Calcium-Carbonat-Hydrat, Calciumcarbonat, Magnesiumcarbonat, Calciumsulfat, Calciumhydroxid, Magnesiumhydroxid, Aluminiumhydroxid, Aluminiumoxid, Aluminiumhydroxid, Hydrotalcid, Glimmer, Silikate, Quarz, Talkum, Titandioxid, Wollastonit oder Gemische von zwei oder mehr der genannten eingesetzt werden. Diese mineralischen Füllstoffe können mit einer Schlichte und/oder einem Haftvermittler oder Haftvermittler-System versehen sein.

Es kann auch günstig sein, wenn die Wandstärke der Außenschicht im Bereich der Wellrohrberge größer ist als im Bereich der Wellrohrtäler. Es hat sich gezeigt, dass Beschädigungen der Außenschicht durch andauernde hohe Krafteinwirkungen durch eine hohe Wandstärke an der Außenseite, also an den Wellrohrbergen, verringert werden können. Eine geringere Wandstärke im Bereich der Wellrohrtäler trägt zu einer hohen Biegeflexibilität bei. In bevorzugten Ausführungsformen der erfindungsgemäßen thermisch gedämmte Rohranordnung ist die Wandstärke der Außenschicht im Bereich der Wellrohrberge um 10 % bis 60 %, vorzugsweise um etwa 15 % bis 55 % und besonders bevorzugt um etwa 20 % bis 50 % größer ist als im Bereich der Wellrohrtäler.

Es kann sich im Rahmen der vorliegenden Erfindung auch als vorteilhaft erweisen, wenn die Außenschicht zwischen zwei benachbarten Wellrohrbergen im Längsschnitt V-förmig ausgestaltet ist. Dadurch wird der Wellrohraußenmantel der erfindungsgemäßen thermisch gedämmten Rohranordnung ebenfalls unempfindlicher gegenüber mechanischen Beschädigungen beispielsweise durch im Verfüllmaterial vorhandene größere Steine, die nicht mehr tief in die sich nach unten hin verjüngenden V-förmigen Wellentäler eindringen können. Dabei kann es besonders günstig sein, wenn die V-förmige Ausgestaltung der Außenschicht zwischen zwei benachbarten Wellrohrbergen im Bereich des zwischen den benachbarten Wellrohrbergen angeordneten Wellrohrtälern zur Verbindungsschicht hin abgerundet ausgebildet ist. Dadurch werden zum einen Beschädigungen durch kleinere Steine, die bis an den Boden der Wellrohrtäler gelangen, vermieden. Zum anderen wird dadurch die Kontaktfläche zwischen den V-förmigen Wellentälern und der Verbindungsschicht vergrößert, was zur Längswasserdichtheit beiträgt.

Es kann auch günstig sein, wenn die Außenschicht zwischen zwei benachbarten Wellrohrtälern im Längsschnitt wannenförmig ausgestaltet ist. Diese Ausgestaltung gewährleistet, dass die dicke Materialstärke der Wellrohrberge über einen hohen Anteil der Rohrmantellänge vorhanden ist, was ebenfalls zur Beschädigungsunempfindlichkeit des mehrschichtigen Wellrohraußenmantels beiträgt. In besonders bevorzugten Ausführungsformen der thermisch gedämmten Rohranordnung besitzt die wannenförmige Ausgestaltung der Schutzschicht zwischen zwei benachbarten Wellrohrtälern im Bereich des Wannenbodens eine größere Wandstärke als im Bereich der Wannenwände. Dadurch wird die hohe Wandstärke an den zur Wellrohraußenseite gerichteten Bereichen der gewellten Außenschicht konzentriert, was zur hohen Beständigkeit des Wellrohraußenmantels gegenüber Beschädigungen von außen beiträgt.

In bevorzugten Ausführungsformen der vorliegenden Erfindung ist die gewellte Außenschicht aus einem Polymermaterial ausgebildet oder ein umfasst ein Polymermaterial. Vorzugsweise handelt es sich bei dem Polymermaterial um einen Thermoplast, insbesondere um ein Polyolefin. Erfindungsgemäß ist der Einsatz eines Polyethylens (bevorzugt HDPE, MDPE oder LDPE), eines Polypropylens oder eines vernetzten Polyethylens bevorzugt.

Die gewellte Außenschicht kann in einer besonders bevorzugten Ausführungsform der vorliegenden Erfindung aus einem vernetzten oder unvernetzten Polyethylen (PE) oder Polyethylen-Copolymeren, in einer vorteilhaften Weiterbildung aus geschäumtem Polyethylen mit einer Dichte von etwa 500 kg/m³ bestehen oder ein solches enthalten. Die gewellte äu-ßere Schutzschicht ist in einem solchen Fall bei vergleichbarer Flexibilität im Vergleich zu einer ungeschäumten Außenschicht robuster und besitzt eine verbesserte zur Wärmedämmwirkung.

Es kann auch hilfreich sein, wenn die Polymerschaumschicht im Wesentlichen über die gesamte Länge des Wellrohraußenmantels eine gleichbleibende Wandstärke aufweist. Dadurch wird die Beschädigungsresidenz des Wellrohraußenmantels weiter erhöht. Im Gegensatz dazu kann es aber auch hilfreich sein, wenn die Polymerschaumschicht im Bereich der Wellrohrtäler eine geringere Wandstärke aufweist als im Bereich der Wellrohrberge. Eine geringere Wandstärke der Polymerschaumschicht im Bereich der Wellrohrtäler trägt zur hohen Biegeflexibilität des erfindungsgemäßen thermisch gedämmten Rohranordnung bei.

Darüber hinaus kann es hilfreich sein, wenn die mindestens eine Dämmschicht ein Polyurethan-Schaum (PUR-Schaum) ist. Auf diese Weise wird eine thermisch gedämmte Rohranordnung erhalten, die für den Einsatz in Nah- und Fernwärmenetzen besonders geeignet ist. Der Schaum kann geschlossenzellig ausgebildet sein und behindert allein dadurch bereits den Weitertransport von Wasser im Falle einer Beschädigung des erfindungsgemäßen Wellrohraußenmantels. Vorzugsweise besitzt der PUR-Schaum eine Dichte (ca. 0,04 bis 0,10 kg/l) und eine geringe Wärmeleitfähigkeit (ca. 0,02 bis 0,04 W/mK). Auf diese Weise wird durch den Schaum eine gute Wärmedämmung erzielt, wodurch die Abkühlung des durch eine thermisch gedämmte Rohranordnungr zu transportierenden Mediums wirkungsvoll reduziert werden kann.

In bevorzugten Ausführungsformen der erfindungsgemäßen thermisch gedämmten Rohranordnung ist das mindestens eine Medienrohr ein Rohr aus einem Polymermaterial, insbesondere aus einem Thermoplast, insbesondere aus einem Polyolefin, hergestellt. Besonders bevorzugt ist das mindestens eine Medienrohr ein Rohr aus einem Polypropylen, einem Polyethylen oder einem vernetzten Polyethylen, wobei Rohre aus vernetztem Polyethylen besonders bevorzugt sind.

Es kann auch günstig sein, wenn die erfindungsgemäße thermisch gedämmte Rohranordnung 2, 3 oder 4 Medienrohre im Wellrohraußenmantel umfasst. Hierdurch kann die thermisch gedämmte Rohranordnung der vorliegenden Erfindung auf die Spezifikationen des Kunden oder die anzuwendende Technik angepasst werden. Auf diese Weise kann insbesondere die Transportkapazität einer solchen thermisch gedämmten Rohranordnung durch den gleichzeitigen Transport eines hohen Fluidvolumens durch mehrere Medienrohre erhöht werden und damit entsprechend auch die übertragene Wärmemenge.

Die erfindungsgemäße thermisch gedämmte Rohranordnung kann wenigstens eine Sperrschicht an oder in der Schutzschicht, an oder in der mindestens einen Dämmschicht oder an oder in dem mindestens einem Medienrohr umfassen, die insbesondere die Diffusion von Sauerstoff oder Wasserdampf oder Kohlenwasserstoffen be- oder verhindern sollen. Diese Sperrschichten können insbesondere polymeres, metallisches oder anorganisches Material enthalten.

Alle Kunststoffmaterialien in der erfindungsgemäßen thermisch gedämmten Rohranordnung können dabei auch in Form von durch einen Recycling-Prozess gewonnenen Materialien eingesetzt werden.

Die erfindungsgemäße thermisch gedämmte Rohranordnung wird bevorzugt durch einen Coextrusionsprozess, einen Postcoextrusionsprozess oder ein mehrstufiges Verfahren hergestellt. Ein solcher Coextrusionsprozess zur Herstellung der erfindungsgemäßen thermisch gedämmten Rohranordnung kann insbesondere in mehreren Schritten durchführbar sein. So kann in einem ersten Schritt ein Medienrohr durch einen Extrusionsvorgang bereitgestellt werden, das in die Folienschicht eingeführt wird. In den Zwischenraum zwischen dem Medienrohr und der Folienschicht werden schaumbildende Komponenten zur Bildung der Dämmschicht eingebracht. Die resultierende Anordnung wird durch einen Extruderkopf zur Extrusion des Außenschicht in Ringform geführt. Gleichzeitig startet die Reaktion der schaumbildenden Komponenten zur Bildung der Dämmschicht. Aufgrund des Anteils an mineralischem Füllstoff in der Folienschicht schmilzt diese im Extruderkopf trotz der dort herrschenden hohen Temperaturen nicht auf. Daraufhin wird Wellenform der Außenschicht in einem Corrugator erzeugt. Aufgrund der längeren Kontaktzeit im Corrugator verschmilzt die Folienschicht im Bereich der Wellrohrtäler umlaufend mit der Folienschicht, wodurch die Längswasserdichtheit der erfindungsgemäßen thermisch gedämmten Rohranordnung gewährleistet ist.

Die erfindungsgemäße thermisch gedämmte Rohranordnung sowie einzelne Teile davon können auch zeilenweise oder schichtweise unter Verwendung eines zeilenaufbauenden oder schichtaufbauenden Fertigungsverfahrens (z. B. 3D-Druck) hergestellt werden, bevorzugt ist jedoch die Herstellung durch einen (Co-)Extrusionsprozess.

Im Folgenden soll die vorliegende Erfindung unter Bezugnahme auf die in den Figuren dargestellten Ausführungsformen im Detail erläutert werden. Dabei zeigen
- Figur 1: eine partielle Längsschnittdarstellung einer thermisch gedämmten Rohranordnung gemäß einer Ausführungsform der vorliegenden Erfindung; und
- Figur 2: eine partielle Längsschnittdarstellung einer thermisch gedämmte Rohranordnung gemäß einer weiteren Ausführungsform der vorliegenden Erfindung.

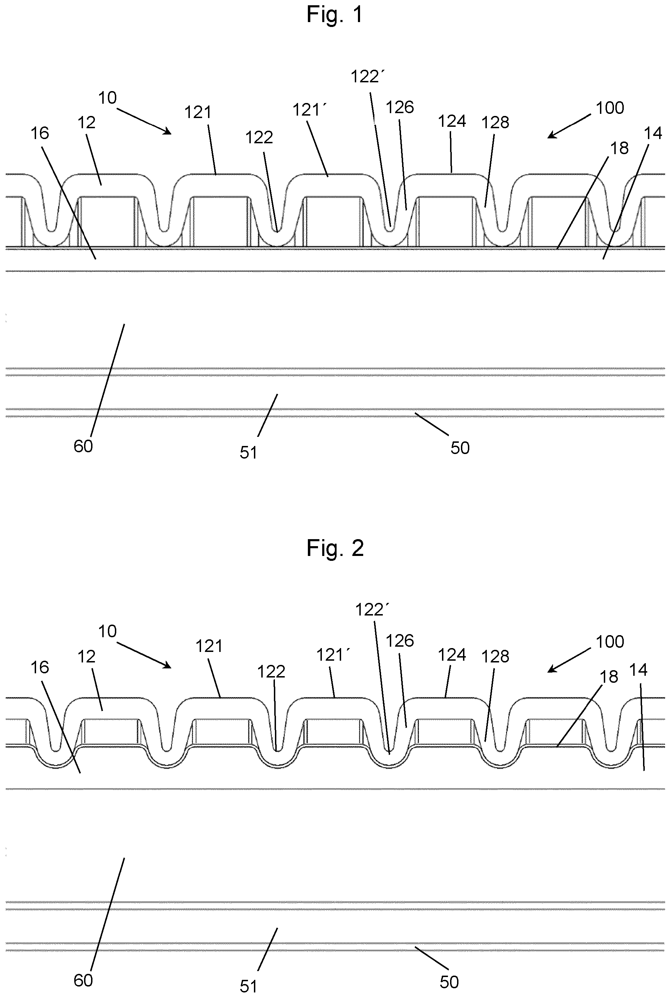

In der Fig. 1 ist ein Ausschnitt aus einer schematischen Längsschnittdarstellung einer erfindungsgemäßen thermisch gedämmte Rohranordnung 100 in Form eines wärmegedämmten Wellrohrs gemäß einer Ausführungsform der vorliegenden Erfindung gezeigt. Der Außendurchmesser solcher Rohre liegt insbesondere im Bereich von 70 mm bis 350 mm. Gemäß der in Fig. 1 dargestellten Ausführungsform umfasst die erfindungsgemäße thermisch gedämmten Rohranordnung umfasst einen Wellrohraußenmantel 10, der eine gewellte Au-ßenschicht 12 und eine Folienschicht 14 umfasst, ein Medienrohr 50 zur Führung eines Fluids, und eine zwischen dem ein Medienrohr 50 und dem Wellrohraußenmantel 10 angeordnete, geschäumte Wärmedämmung 60 umfasst, die den Raum zwischen dem Medienrohr 50 und dem Wellrohraußenmantel 10 ausfüllt.

Gemäß der in Fig. 1 gezeigten Ausführungsform ist die gewellte Außenschicht 12 aus Polyethylen hoher Dichte (HDPE) hergestellt. Die Folienschicht 14 ist in der gezeigten Ausführungsform aus einer 5mm dicke Schaumschicht 16 aus geschäumtem, geschlossenzelligen Polyethylen, auf die eine Polyethylenfolie 18 mit einer Dicke von 70 µm aufkaschiert ist, aufgebaut. Die Polyethylenfolie 18 enthält Wollastonit als mineralischen Füllstoff in einem Anteil von 20 Gew.-%, bezogen auf das Gesamtgewicht der aufkaschierten Polyethylenfolie als 100 Gew.-%. Durch den mineralischen Füllstoff wird das vorzeitige Aufschmelzen der Folienschicht 14 während der Herstellung der thermisch gedämmten Rohranordnung 100, insbesondere im Extruderkopf während der Extrusion der Außenschicht 12, vermieden.

Durch ihre Wellenform weist die Außenschicht 12 eine Vielzahl an Wellrohrberge 121, 121' und Wellrohrtäler 122, 122' auf. Die Wellenform erhält die Außenschicht im Corrugator, wo die vorher im Extruderkopf aufgrund der kurzen Verweilzeit von etwa 15 s noch nicht geschmolzene Polyethylenfolie 18 in einem längeren Kontakt von ca. 35 s mit der heißen Au-ßenschicht 12 steht. Durch diesen längeren Kontakt wird die Polyethylenfolie 18 flüssig und verschmilzt mit der Außenschicht 12 im Bereich der Wellrohrtäler 122, 122' umlaufen. Dadurch entsteht eine umlaufende Verschweißung der Außenschicht 12 mit der Folienschicht 14 im Bereich eines jeden Wellrohrtals 122, 122'. Kommt es beispielsweise beim Verlegen der erfindungsgemäßen thermisch gedämmten Rohranordnung 100 zu einer Beschädigung der Außenschicht 12, kann an der beschädigten Stelle durch die Außenschicht 12 tretendes Wasser nicht in Längsrichtung der thermisch gedämmten Rohranordnung 100 zwischen der Außenschicht 12 und der Wärmedämmung 60 transportiert werden. Darüber hinaus gelangt dieses eingetretene Wasser auch nicht in die Dämmschicht 60, so dass deren Durchfeuchtung unterbunden wird und deren gute thermische Isolierungseigenschaften erhalten bleiben.

In der in Fig. 1 gezeigten Ausführungsform ist die Außenschicht 12 im Bereich der Wellrohrberge 121, 121' dicker ausgebildet als im Bereich der Wellrohrtäler 122, 122'. Dabei ist die Wandstärke der Außenschicht 12 im Bereich der Wellrohrberge 121, 121' um etwa 50 % größer ist als im Bereich der Wellrohrtäler 122, 122'. So ist die Außenschicht 12 gemäß Fig. 1 im Bereich der Wellrohrberge 121, 121' etwa 3 mm dick, während die Wanddicke der Außenschicht 12 im Bereich der Wellrohrtäler 122, 122' etwa 2 mm beträgt. Diese hohe Wandstärke an der Außenseite verringert die Gefahr von Beschädigungen des Wellrohraußenmantels 10 durch andauernde hohe Krafteinwirkungen. Zusätzlich trägt die geringere Wandstärke im Bereich der Wellrohrtäler 122, 122' zu einer hohen Biegeflexibilität der erfindungsgemäßen thermisch gedämmten Rohranordnung 100 bei.

Zwischen zwei benachbarten Wellrohrbergen 121, 121' ist die Außenschicht 12 im Längsschnitt V-förmig ausgestaltet. Größere, im Verfüllmaterial vorhandene Steine können so nicht mehr tief in die sich nach unten hin verjüngenden V-förmigen Wellentäler eindringen und dort die Außenschicht 12 beschädigen. Dabei ist die V-Form der Wellrohrtäler 121, 121' zur Folienschicht 14 hin abgerundet ausgebildet. Dadurch werden Beschädigungen durch kleinere Steine, die bis an den Boden der Wellrohrtäler 121, 121 'gelangen, vermieden.

Zwischen zwei benachbarten Wellrohrtälern 122, 122' ist die Außenschicht 12 im Längsschnitt wannenförmig ausgestaltet ist. Diese Wannenform führt dazu, dass die dicke Materialstärke der Wellrohrberge 122, 122' über einen hohen Anteil der Rohrmantellänge vorhanden ist, was die Unempfindlichkeit des Wellrohraußenmantels 10 gegenüber Beschädigungen von außen weiter erhöht. Die Wandstärke der Außenschicht 12 ist dabei im Bereich des Wannenbodens 124 größer als im Bereich der sich an den Wannenbodens 124 anschließenden Wannenwände 126, 128.

Gemäß der in Fig. 1 gezeigten Ausführungsform ist die gewellte Außenschicht 12 aus Polyethylen hoher Dichte (HDPE) hergestellt. Gemäß dieser Ausführungsform ist das Medienrohr 50 als Rohr aus vernetztem Polyethylen (PE-X) ausgebildet. Es umfasst ein Lumen 51 zur Aufnahme, Speicherung oder Leitung des Fluids. An der Außenoberfläche des Medienrohrs 50 ist eine Wärmedämmung 60 angeordnet, die mit ihrer Innenoberfläche an der Au-ßenoberfläche des Medienrohrs 60 anliegt. Die Wärmedämmung 60 ist aus einem geschäumten, geschlossenzelligen Polyurethan ausgebildet. Dabei wurde die Wärmedämmung 60 durch eine Polymerisationsreaktion der das Polyurethan bildenden Komponenten unter Aufschäumen direkt auf dem Medienrohr 50 erzeugt.

In Fig. 2 ist eine weitere Ausführungsformen der erfindungsgemäßen thermisch gedämmten Rohranordnung 100 gezeigt. Um Wiederholungen zu vermeiden, werden daher im Folgenden nur Unterschiede zu der in Fig. 1 dargestellten Ausführungsform der erfindungsgemäßen thermisch gedämmten Rohranordnung 100 beschrieben. Die Ausführungsformen zu Fig. 1 gelten auch für die Ausführungsform gemäß Fig. 2 entsprechend. Gleiche Elemente sind in den Abbildungen durch identische Bezugszeichen gekennzeichnet.

In Fig. 2 ist eine weitere Ausführungsform der erfindungsgemäßen thermisch gedämmten Rohranordnung 100 ebenfalls in einer schematischen partiellen Längsschnittdarstellung gezeigt. Die in Fig. 2 dargestellte Ausführungsform unterscheidet sich von der zu Fig. 1 beschriebenen Ausführungsform hinsichtlich der Verteilung der Wandstärke der Schaumschicht 16 in Längsrichtung des Wellrohraußenmantels 10. Dabei weist die Schaumschicht 16 im Bereich der Wellrohrtäler 122, 122' eine um etwa ein Drittel geringere Wandstärke auf als im Bereich der Wellrohrberge 121, 121'. Durch die geringere Wandstärke der Schaumschicht 18 im Bereich der Wellrohrtäler 121, 121' wird die hohe Biegeflexibilität der erfindungsgemäßen thermisch gedämmten Rohranordnung 100 weiter verbessert.

Gemäß der in Fig. 2 gezeigten Ausführungsform ist die gewellte Außenschicht 12 aus Polyethylen mittlerer Dichte (MDPE) hergestellt. Die Folienschicht 14 ist in der gezeigten Ausführungsform aus einer 5 mm dicken Schaumschicht 16 aus geschäumtem, geschlossenzelligen Polyethylen, auf die eine Polyethylenfolie 18 mit einer Dicke von 60 µm aufkaschiert ist, aufgebaut. Die Polyethylenfolie 18 enthält Calciumcarbonat als mineralischen Füllstoff in einem Anteil von 15 Gew.-%, bezogen auf das Gesamtgewicht der aufkaschierten Polyethylenfolie 18 als 100 Gew.-%. Durch den mineralischen Füllstoff wird auch gemäß dieser Ausführungsform der vorliegenden Erfindung das vorzeitige Aufschmelzen der Folienschicht 14 während der Herstellung der thermisch gedämmten Rohranordnung 100, insbesondere im Extruderkopf während der Extrusion der Außenschicht 12, vermieden. So kommt es wieder zu einer gezielten umlaufenden Verschweißung der Außenschicht 12 mit der Folienschicht 14 im Bereich eines jeden Wellrohrtals 122, 122', so dass auch für diese Ausführungsform der erfindungsgemäßen thermisch gedämmten Rohranordnung 100 die gute Längswasserdichtheit und konstante thermische Dämmeigenschaften der Dämmschicht 60 auch bei durch die Außenschicht 12 durchtretendem Wasser gewährleistet sind.

Es versteht sich, dass die voranstehend erläuterten Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die vorliegende Erfindung wurde exemplarisch unter Bezugnahme auf die in den Figuren dargestellten Ausführungsformen im Detail erläutert. Es versteht sich, dass die vorliegende Erfindung nicht auf diese Ausführungsformen beschränkt ist. Vielmehr ergibt sich der Umfang der vorliegenden Erfindung aus den beigefügten Ansprüchen.

## Patentansprüche

1. Thermisch gedämmte Rohranordnung (100) zur Aufnahme, Speicherung oder Leitung eines Fluids, umfassend:
einen Wellrohraußenmantel (10), der eine gewellte Außenschicht (12), die Wellrohrberge (121, 121') und Wellrohrtäler (122, 122') aufweist, und eine Folienschicht (14) umfasst, wobei die Folienschicht im Bereich der Wellrohrtäler (122, 122') umlaufend mit der Außenschicht (12) verbunden ist;
mindestens ein in den Wellrohraußenmantel (10) aufgenommenes Medienrohr (50); und
mindestens eine Dämmschicht (60), die den Raum zwischen dem mindestens einen Medienrohr (50) und dem Wellrohraußenmantel (10) zumindest teilweise ausfüllt;
**dadurch gekennzeichnet, dass**
die Folienschicht (14) zumindest an ihrer der Außenschicht (12) zugewandten Seite mineralische Füllstoffe umfasst.

2. Thermisch gedämmte Rohranordnung (100) nach Anspruch 1, **dadurch gekennzeichnet, dass** die Folienschicht (14) mehrschichtig aufgebaut ist, wobei die mineralischen Füllstoffe zumindest in der der Außenschicht (12) zugewandten Schicht (18) der Folienschicht (14) enthalten sind.

3. Thermisch gedämmte Rohranordnung (100) nach Anspruch 2, **dadurch gekennzeichnet, dass** die der Außenschicht (12) zugewandte Schicht (18) die mineralischen Füllstoffe in einem Anteil von 3 Gew.-% bis 30 Gew.%, bezogen auf das Gesamtgewicht der Schicht (§§) als 100 Gew.-%, umfasst.

4. Thermisch gedämmte Rohranordnung (100) nach Anspruch 2 oder Anspruch 3,
**dadurch gekennzeichnet, dass** die der Außenschicht (12) zugewandte Schicht (18) als Polyethylenfolie ausgebildet ist.

5. Thermisch gedämmte Rohranordnung (100) nach einem der Ansprüche 2 bis 4,
**dadurch gekennzeichnet, dass** die Folienschicht (14) eine Schicht (16) aus geschäumtem Polymermaterial, insbesondere aus einem geschlossenzelligen Polymerschaumschaum, umfasst.

6. Thermisch gedämmte Rohranordnung (100) nach Anspruch 5, **dadurch gekennzeichnet, dass** die der Außenschicht (12) zugewandte Schicht (18) auf die Polymerschaumschicht (16) aufkaschiert ist.

7. Thermisch gedämmte Rohranordnung (100) nach einem der Ansprüche 1 bis 6,
**dadurch gekennzeichnet, dass** die Wandstärke der der Außenschicht (12) im Bereich der Wellrohrberge (121, 121') größer ist als im Bereich der Wellrohrtäler (122, 122').

8. Thermisch gedämmte Rohranordnung (100) nach einem der Ansprüche 1 bis 7,
**dadurch gekennzeichnet, dass** der Außenschicht (12) zwischen zwei benachbarten Wellrohrbergen (121, 12') im Längsschnitt V-förmig ausgestaltet ist.

9. Thermisch gedämmte Rohranordnung (100) nach einem der Ansprüche 1 bis 8,
**dadurch gekennzeichnet, dass** der Außenschicht (12) zwischen zwei benachbarten Wellrohrtälern (122, 122') im Längsschnitt wannenförmig ausgestaltet ist.

10. Thermisch gedämmte Rohranordnung (100) nach einem der Ansprüche 1 bis 9,
**dadurch gekennzeichnet, dass** die Verbindung der gewellte Außenschicht (12) mit der Folienschicht (14) als Verschweißung und/oder Verklebung ausgestaltet ist.
